# EUROPÄISCHE PATENTANMELDUNG

(11) **EP 1 351 478 A1**
(43) Veröffentlichungstag der Anmeldung: **08.10.2003**
(21) Anmeldenummer: 02007572.7
(22) Anmeldetag: 03.04.2002
(51) Int. Cl.: H04M 7/00, H04L 12/66, H04L 29/06

(54) **Steuerung einer Sprachkommunikationsverbindung in einem paketvermittelnden Kommunikationsnetz zwischen unterschiedlichen Domänen zugeordneten Kommunikationseinrichtungen**

(71) Anmelder: SIEMENS AKTIENGESELLSCHAFT, 80333 München (DE)
(72) Erfinder: Kleiner, Patrick, 81476 München (DE)

(57) **Zusammenfassung**

Ein wesentlicher Aspekt der Erfindung liegt in der Ausgestaltung eines Netzelements und eines Verfahrens zur Verarbeitung von Signalisierungsdaten und zur Verbindungssteuerung einer Sprachkommunikationsverbindung zwischen wenigstens zwei unterschiedlichen paketvermittelnden Domänen zugeordneten Kommunikationseinrichtungen von Teilnehmern innerhalb eines Kommunikationsnetzes. Das erfindungsgemäße Netzelement (GW) weist mindestens eine Signalisierungsübertragungseinheit (s-UE) zur Umsetzung des Datenformats von aus einer ersten Domäne stammenden Signalisierungsdaten in ein zur Weiterleitung der Signalisierungsdaten in eine zweite Domäne geeignetes Datenformat sowie mindestens eine Media-Übertragungseinheit (m-UE) zur Umsetzung des Datenformats von aus der ersten Domäne stammenden, zur Sprachkommunikationsverbindung gehörende Nutzdaten in ein zur Weiterleitung der Nutzdaten in die zweite Domäne geeignetes Datenformat. Hierbei weist die Signalisierungsübertragungseinheit zusätzlich Kommunikationsmittel zur Steuerung der Media-Übertragungseinheit (m-UE) unter Ausnutzung der Information aus den Signalisierungsdaten auf.

## Beschreibung

Die Erfindung betrifft ein Netzelement und ein Verfahren zur Verarbeitung von Signalisierungsdaten und zur Verbindungssteuerung einer Sprachkommunikationsverbindung zwischen wenigstens zwei unterschiedlichen paketvermittelnden Kommunikationsnetzen oder Domänen zugeordneten Kommunikationsendeinrichtungen innerhalb eines paketvermittelnden Kommunikationsnetzes.

Typischerweise wird eine Kommunikationsverbindung zwischen Teilnehmern eines paketvermittelnden Kommunikationsnetzes (z.B. Voice Over IP) die Nutzdaten nicht über ein Vermittlungssystem geführt. Nur in bekannten hybriden Telekommunikationsnetzen, die eine Konvergenz zwischen den konventionellen Zeitmultiplexkommunikationsnetzen bzw. leitungsvermittelnden Kommunikationsnetzen und den paketvermittelnden Kommunikationsnetzen darstellen, werden die Nutzdaten, sofern an einer Kommunikationsverbindung ein Teilnehmer eines konventionellen leitungsvermittelnden Kommunikationsnetzes beteiligt ist, und somit nicht direkt über das paketvermittelnde Kommunikationsnetz erreichbar ist, über ein Vermittlungssystem geführt. In einem solchen Fall ist eine Wandlung der Nutzdaten zur Anpassung an die in den unterschiedlichen Kommunikationsnetzen verwendete Übertragungstechnik erforderlich. Eine solche Wandlung ist insbesondere bei einem Übergang von einem paketvermittelnden Kommunikationsnetz mit Paket-Übertragungstechnik zu einem leitungsvermittelnden Kommunikationsnetz mit Zeitmultiplex-Übertragungstechnik (TDM-Technik) notwendig. Diese Wandlung wird sowohl bei der Übertragung von Daten des Kommunikationsnetzes mit Zeitmultiplex-Übertragungstechnik für ein Kommunikationsnetz mit Paket-Übertragungstechnik (z.B. IP oder ATM) als auch bei einer Übertragung von Daten des Kommunikationsnetzes mit Paket-Übertragungstechnik für ein Kommunikationsnetz mit Zeitmultiplex-Übertragungstechnik durchgeführt. Bei einer Sprachkommunikationsverbindung zwischen wenigstens zwei Teilnehmern eines paketvermittelnden Kommunikationsnetzes werden ihre Nutzdaten vorzugsweise direkt über das paketvermittelnde Kommunikationsnetz ausgetauscht. Die Nutzdaten werden in diesem Fall somit im allgemeinen nicht über das Vermittlungssystem mit Hilfe von Konvertern oder Gateways geführt.

Telefonieteilnehmer in einem paketvermittelnden Kommunikationsnetz sind z.B. Teilnehmer, die mit einem auf einem Internetprotokoll basierenden Netz direkt oder über eine Wählverbindung verbunden sind. Neben einem Zugang zum paketvermittelnden Kommunikationsnetz werden dem Teilnehmer auch Sprachund/oder Faxdienste zur Verfügung gestellt. Diese Sprachund/oder Faxdienste sollten den gleichen Leistungsumfang haben, wie ihn konventionelle Telefone und Faxgeräte bieten. Insbesonder die Sprachnutzdaten eines solchen Teilnehmers werden gemäß Internet-Protokoll als Datenpakete übertragen, z.B. gemäß dem sogenannten User Datagram Protocol (UDP). Die Übertragung von Signalisierungsinformationen erfolgt im paketvermittelnden Kommunikationsnetz mit Hilfe von Signalisierungspaketen gemäß definierten Standards, wie z.B. H.323, H.225, H.245, H.450, SIP, SIP-T und BICC.

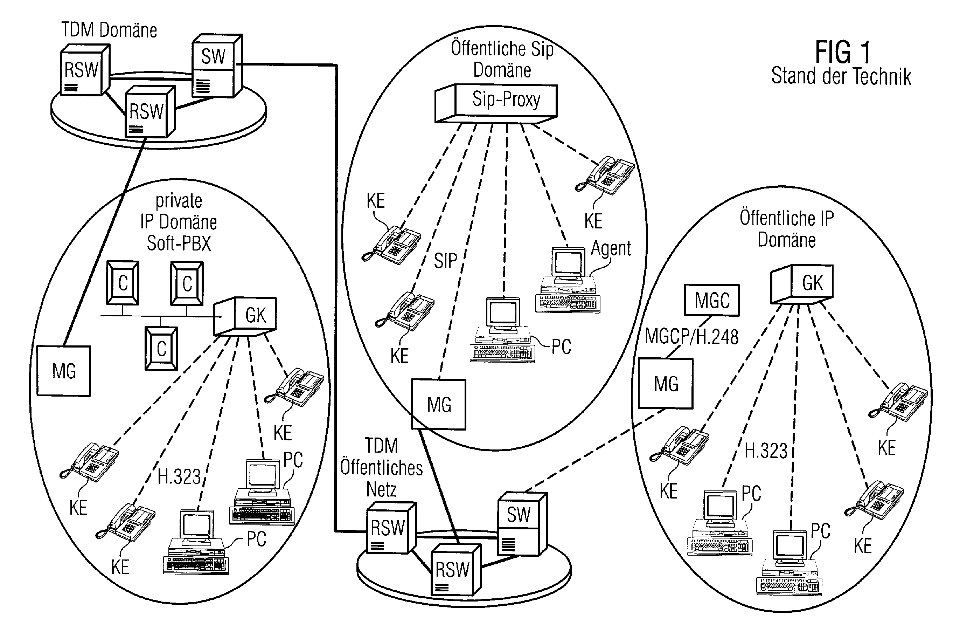

In paketvermittelnden Kommunikationsnetzen erfolgt die Übertragung von Signalisierungsdaten und die Übertragung von Nutzdaten normalerweise auf getrennten Übertragungswegen. Die Nutzdaten werden dem weiteren Teilnehmer direkt zugeführt. Ist eine Wandlung des Nutzdatenformats von TDM auf IP oder ATM notwendig, so werden die Nutzdaten einer Schnittstelleneinheit zur Wandlung zugeführt, z.B. einem Media Gateway MG, wie er auch in der Figur 1 gezeigt ist. Die Signalisierungsdaten werden mit Hilfe von Signalisierungsdatenpaketen einer Vermittlungsinstanz, z.B. einem Media Gateway Controler MGC (siehe Figur 1), zugeführt, welche die Verbindungssteuerung durchführt.

In der Figur 1 ist eine beispielhafte Netzkonstellation eines hybriden Kommunikationsnetzes gemäß dem Stand der Technik gezeigt. Hierbei ist beispielsweise ein privates paketvermittelnden Kommunikationsnetz mit einer IP-Domain, das als Komponenten mehrere Kommunikationsendeinrichtungen (H.323) KE sowie Rechnersysteme, z.B. Personal Computer PC, einen Gatekeeper GK in einer H.323-Domäne, der gegebenenfalls mit mehreren Servern C verbunden ist, oder einen SIP-Proxy-Server SIP-Proxy in einer SIP-Domäne sowie ein Media Gateway MG mit einer Verbindung zu einem privaten leitungsvermittelnden Kommunikationsnetz mit TDM-Technik (TDM = Time Division Multiplex) über eine abgesetzte Vermittlungseinheit RSW aufweist. Ein solches privates Paket- sowie leitungsvermittelndes Kommunikationsnetz kann z.B. ein Kommunikationsnetz eines Unternehmens sein.

Diese privaten leitungsvermittelnden Kommunikationsnetze, auch private TDM-Kommunikationsnetze genannt, sind mit einem öffentlichen TDM-Kommunikationsnetz, das auch Komponenten wie abgesetzte Vermittlungseinheiten RSW und Vermittlungssysteme SW aufweist, verbunden. Dieses öffentliche TDM-Kommunikationsnetz kann mit weiteren paketvermittelnden Kommunikationsnetzen, sowohl privaten als auch öffentlichen Kommunikationsnetzen, verbunden sein, wie es in der Figur 1 mit den Bezeichnungen öffentliche SIP-Domäne oder öffentliche IP-Domäne in Figur 1 gezeigt ist. Die gezeigten paketvermittelnden Kommunikationsnetze sind üblicherweise in sogenannte Domänen (Zonen oder Domains) unterteilt. In der Figur 1 ist jeweils gezeigt, dass ein privates paketvermittelndes Kommunikationsnetz eine Domäne aufweist sowie jedes öffentliche paketvermittelnde Kommunikationsnetz eine eigene Domäne aufweist.

Derzeit existierende paketvermittelnde Kommunikationsnetze oder Domänen, die Sprachkommunikationsdienste zur Verfügung stellen, sind in der Regel voneinander isolierte Systeme. Innerhalb eines paketvermittelnden Kommunikationsnetzes in den Grenzen der eigenen Domäne sind Sprachkommunikationsverbindungen zwischen zwei oder mehreren Kommunikationsendeinrichtungen von Teilnehmern möglich, jedoch sind Sprachkommunikationsverbindungen zwischen wenigstens zwei unterschiedlichen Domänen zugeordneten Kommunikationseinrichtungen nicht möglich.

Dies gilt nicht für Datendienste. Normalerweise werden die aufgebauten Datenverbindungen zwischen unterschiedlichen Domänen über Daten-Firewalls geleitet. Der Grund, dass eine Sprachübertragung nicht möglich ist, liegt darin, dass aus Sicherheitsgründen diese Daten-Firewalls die Sprachübertragung über Netz- bzw. Domänengrenzen hinweg sperren. Üblicherweise sperren die Daten-Firewalls die UDP-IP-Datenpakete. Eine Öffnung der Daten-Firewalls für UDP-IP-Datenpakete und damit für Sprache, die üblicherweise über solche UDP-IP-Datenpakete übertragen wird, würde ein erhebliches Sicherheitsrisiko durch andere UDP-IP-Protokolle bedeuten (z.B. sogenannte PING-Angriffe, denial of service usw.) und wäre daher keine zufriedenstellende Lösung.

Um Sprachkommunikationsverbindungen zwischen wenigstens zwei unterschiedlichen Domänen zugeordneten Kommunikationsendeinrichtungen von Teilnehmern anbieten zu können, müssen an der Netz- bzw. Domänengrenze folgende Funktionen sichergestellt werden:
- nur berechtigte Teilnehmer dürfen Sprachdatenpakete in ein anderes Kommunikationsnetz bzw. Domäne versenden,
- Teilnehmer einer anderen Domäne dürfen in der Domäne, in der sie "zu Gast sind", nur bestimmte Dienste nutzen,
- in beiden Kommunikationsnetzen bzw. Domänen müssen identische Dienste bzw. Leistungsmerkmale zum Ablauf kommen oder es müssen gegebenenfalls angeforderte nichtkooperierende Dienste an den Netzgrenzen abgeschlossen werden,
- die Übertragung von Sprachdatenpaketen muss über die Domänengrenze hinweg protokollierbar und überwachbar sein,
- die Signalisierung der unterschiedlichen Domänen müssen gegeneinander abgeglichen werden,
- die Netzadressen der unterschiedlichen Domänen müssen gegeneinander bekannt gemacht werden, damit die Sprachdatenpakete zwischen den jeweiligen Kommunikationsendeinrichtungen versendet werden können.

Derzeit kann die Übertragung von Sprachdatenpaketen über Netz- bzw. Domänengrenzen hinweg nur über die klassische Zeitmultiplexübertragungstechnik erfolgen. Wie oben bereits dargestellt, muss zur Wandlung der Nutzdaten zur Anpassung an die in den unterschiedlichen Kommunikationsnetzen verwendeten Übertragungstechnik in die paketvermittelnden Kommunikationsnetze sogenannte Media Gateways (z.B. in Figur 1 MG) eingeführt werden. Durch den häufigen Wandlungsprozess zwischen Paketübertragungs- und Zeitmultiplexübertragungstechnik wird die Sprachqualität stark beeinträchtigt. Außerdem sind durch die Media Gateways weitere Hardwareaufwendungen notwendig, die solche Systeme für Netzanbieter weniger wirtschaftlich attraktiv machen.

Die Aufgabe der Erfindung besteht darin, Sprachkommunikationsverbindungen zwischen wenigstens zwei unterschiedlichen Domänen zugeordneten Kommunikationseinrichtungen von Teilnehmern über größere Distanzen über mehrere Netz- bzw. Domänengrenzen hinweg wirtschaftlich mit einer guten Sprachqualität zu ermöglichen.

Die Aufgabe wird hinsichtlich eines Netzelements durch die im Patentanspruch 1 angegebenen Merkmale sowie hinsichtlich eines Verfahrens durch die im Patentanspruch 13 angegebenen Merkmale gelöst. Vorteilhafte Ausgestaltungen der Erfindung sind in den weiteren Patentansprüchen gekennzeichnet.

Ein wesentlicher Aspekt der Erfindung liegt in der Ausgestaltung eines Netzelements zur Verarbeitung von Signalisierungsdaten und zur Verbindungssteuerung einer Sprachkommunikationsverbindung zwischen wenigstens zwei unterschiedlichen paketvermittelnden Kommunikationsnetzen oder Domänen zugeordneten Kommunikationseinrichtungen von Teilnehmern innerhalb eines Kommunikationsnetzes. Dieses Netzelement weist mindestens eine Signalisierungsübertragungseinheit zur Umsetzung des Datenformats von aus einer ersten Domäne stammenden Signalisierungsdaten in ein zur Weiterleitung der Signalisierungsdaten in eine zweite Domäne geeignetes Datenformat sowie mindestens eine Media-Übertragungseinheit zur Umsetzung des Datenformats von aus der ersten Domäne stammenden, zur Sprachkommunikationsverbindung gehörende Nutzdaten in ein zur Weiterleitung der Nutzdaten in die zweite Domäne geeignetes Datenformat. Hierbei weist die Signalisierungsübertragungseinheit zusätzlich Kommunikationsmittel zur Steuerung der Media-Übertragungseinheit unter Ausnutzung der Information aus den Signalisierungsdaten auf. Zur Steuerung der Media-Übertragungseinheit können standardisierte Protokolle wie z.B. H.248, MGCP (Media Gateway Control Protocol), COPS (Community Oriented Policing Service) und MIDCOM (Middlebox Communication) verwendet werden.

Dieses Netzelement ist auf der Basis von IP ein IP/IP-Gateway, so dass die Sprachdatenpakete direkt von einem paketvermittelnden Kommunikationsnetz bzw. Domäne in ein anderes paketvermittelndes Kommunikationsnetz bzw. Domäne ohne unnötige Verzögerungen durch Wandlungen in der Übertragungstechnik geleitet werden können. Durch diese IP/IP-Gateway sind die in einem TDM-Kommunikationsnetz angeordneten Media-Gateways zur IP-Übertragung nicht notwendig. Daher stellt das erfindungsgemäße Netzelement eine kosteneffiziente Lösung dar.

Das erfindungsgemäße Netzelement zeichnet sich insbesondere durch eine Master/Slave-Beziehung zwischen der mindestens einen Signalisierungsübertragungseinheit und der Media-Übertragungseinheit aus. Diese Beziehung zur Steuerung der Media-Übertragungseinheit umfaßt eine Ermittlung des Status, der Auslastung sowie der Funktionalität, insbesondere hinsichtlich von Diensten bzw. Leistungsmerkmalen, der Media-Übertragungseinheit. Dadurch kann die Nutzdatenübertragung über die Media-Übertragungseinheiten über Netzgrenzen hinweg vollständig kontrolliert bzw. gesteuert werden.

Bei dem erfindungsgemäßen Netzelement kann die Anzahl der im Netzelement angeordneten Signalisierungsübertragungseinheiten sowie die Anzahl der im Netzelement angeordneten Media-Übertragungseinheiten sinnvollerweise von der Anzahl der mit dem Netzelement verbundenen Domänen abhängig sein.

Die im erfindungsgemäßen Netzelement angeordnete Signalisierungsübertragungseinheit kann folgende Kommunikationsmittel aufweisen:
- zur Umsetzung des Netzadressformats von aus einer ersten Domäne stammenden Signalisierungsdaten in ein Netzadressformat, das zur Weiterleitung der Signalisierungsdaten in eine zweite Domäne geeignet ist,
- zur Terminierung von aus einer ersten Domäne stammenden Signalisierungsdaten, die in der ersten Domäne gültige Leistungsmerkmale betreffen, d.h. Protokoll-Terminierung sowie Service-Umsetzung, -überwachung und -sperrung,
- zur Bereitstellung einer Firewall-Proxy-Funktionalität, wodurch die zur Sprachverbindung gehörenden Nutzdaten eine Daten-Firewall passieren können,
- zur Kontrolle des Verkehrsaufkommens und zur Überlastabwehr.

Die im erfindungsgemäßen Netzelement angeordnete Media-Übertragungseinheit kann folgende Kommunikationsmittel aufweisen:
- zur Umsetzung von Prioritätskennzeichen von aus einer ersten Domäne stammenden Signalisierungsdaten in Prioritätskennzeichen, die zur Weiterleitung der Signalisierungsdaten in eine zweite Domäne geeignet sind,
- zur Kontrolle des Verkehrsaufkommens und zur Überlastabwehr.

Abhängig vom zu bewältigenden Verkehrsaufkommen können die logisch zusammengehörigen Übertragungseinheiten in Form der mindestens einen Signalisierungsübertragungseinheit (s-UE) und der mindestens einen Media-Übertragungseinheit (m-UE) auf einer gemeinsamen Hardware-Plattform oder auf getrennten Hardware-Plattformen realisiert sein.

Durch das erfindungsgemäße Netzelement wird weiterhin Administrationsaufwand hinsichtlich von Netzadressen, die üblicherweise bezüglich aller Zwischen-Domänen-Beziehungen in allen Gatekeepern der jeweiligen Domäne administriert werden müssen, eingespart. So müssen lediglich nur die Netzadressen zur benachbarten Domäne in dem erfindungsgemäßen Netzelement administriert werden. Des Weiteren können Schutzmechanismen gegen Missbrauch aus fremden Domänen oder auch Servicebeschränkungen wesentlich einfacher realisiert werden, da jeglicher Zwischen-Domänen-verkehr (d.h. Signalisierungsdaten und Nutzdaten) über ein logisches Netzelement geleitet werden. Dadurch können auch auf die allgemeine Sicherheit und Ordnung bezogene Leistungsmerkmale wie z.B. das richterliche Mithören bzw. Überwachen von Gesprächsverbindungen wenig aufwendig realisiert werden.

Ein weiterer Aspekt der Erfindung liegt in einem Verfahren zur Verarbeitung von Signalisierungsdaten und zur Verbindungssteuerung einer Sprachkommunikationsverbindung zwischen wenigstens zwei unterschiedlichen Domänen zugeordneten Kommunikationseinrichtungen innerhalb eines paketvermittelnden Kommunikationsnetzes. Das Verfahren zeichnet sich durch folgende Schritte aus:
- Umsetzung des Datenformats von aus einer ersten Domäne kommenden Signalisierungsdaten in ein zur Weiterleitung der Signalisierungsdaten in eine zweite Domäne geeignetes Datenformat,
- Umsetzung des Datenformats von aus einer ersten Domäne kommenden, zur Sprachkommunikationsverbindung gehörenden Nutzdaten in ein zur Weiterleitung der Nutzdaten in eine zweite Domäne geeignetes Datenformat und
- Weiterleitung der umgesetzten Signalisierungs- und Nutzdaten in die zweite Domäne,
- wobei die Umsetzung der Signalisierungsdaten und die Umsetzung der Nutzdaten durch eine Steuerung unter Ausnutzung der Signalisierungsdaten miteinander synchronisiert werden.

Dieses Verfahren weist analog die vorstehend genannten Vorteile auf.

Weitere Ausgestaltungen und Vorteile der Erfindung ergeben sich aus dem nachstehend beschriebenen Ausführungsbeispiel, das unter Bezugnahme auf die Zeichnung im folgenden näher erläutert wird. In der Zeichnung zeigt:
Figur 1 eine beispielhafte Netzkonstellation eines hybriden Kommunikationsnetzes gemäß dem eingangs erwähnten Stand der Technik,
Figur 2 eine beispielhafte Netzkonstellation, bei der an den Grenzen zwischen den paketvermittelnden Kommunikationsnetzen das erfindungsgemäße Netzelement eingeführt ist.
Figur 3 einen beispielhaften Aufbau des erfindungsgemäßen Netzelements
Figur 4 eine beispielhafte Variante im Aufbau des erfindungsgemäßen Netzelements
Figur 5 ein Beispiel für eine Kommunikationsverbindung zwischen wenigstens zwei unterschiedlichen Domänen zugeordneten Kommunikationspunkten in Form von Kommunikationsendeinrichtungen oder Kommunikationsübergangseinheiten.

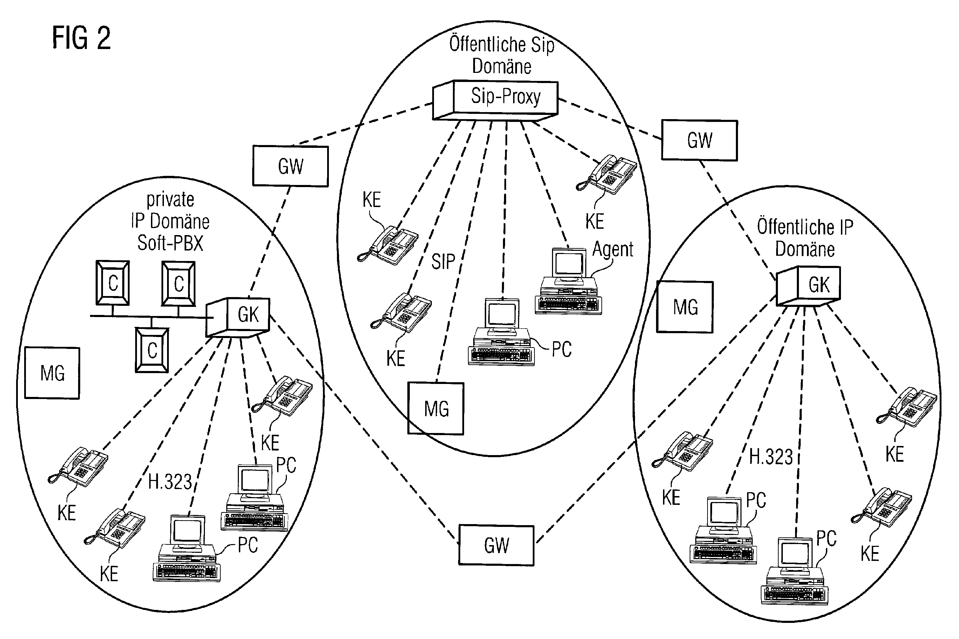

Die Figur 2 zeigt eine Netzkonstellation, ähnlich wie in Figur 1, mit dem Unterschied, dass an den Grenzen zwischen den paketvermittelnden Kommunikationsnetzen "private IP-Domäne", "Öffentliche Sip-Domäne" und "Öffentliche IP-Domäne" das Netzelement als Gateway GW eingeführt ist.

Figur 2 zeigt eine typische Netzkonstellation. Die Übertragung von Sprachdatenpaketen zwischen den benachbarten Domänen (privaten sowie öffentlichen), d.h. sowohl Signalisierungsdatenpakete als auch Nutzdatenpakete, passieren das Netelement GW mit seinen Netzübergangsfunktionen (Gateway-Funktionen). Das Netzelement GW ist so konzipiert, dass alle Funktionen entweder in einer Hardwareplattform oder in mehreren verteilten Hardwareplattformen implementiert sind. Verschiedene Varianten der Funktionsverteilung sind denkbar. Auf diese Weise kann sowohl ein geringes als auch ein hohes Verkehrsaufkommen bewältigt werden. Die einzelnen Funktionen kommunizieren untereinander über standardisierte Protokolle.

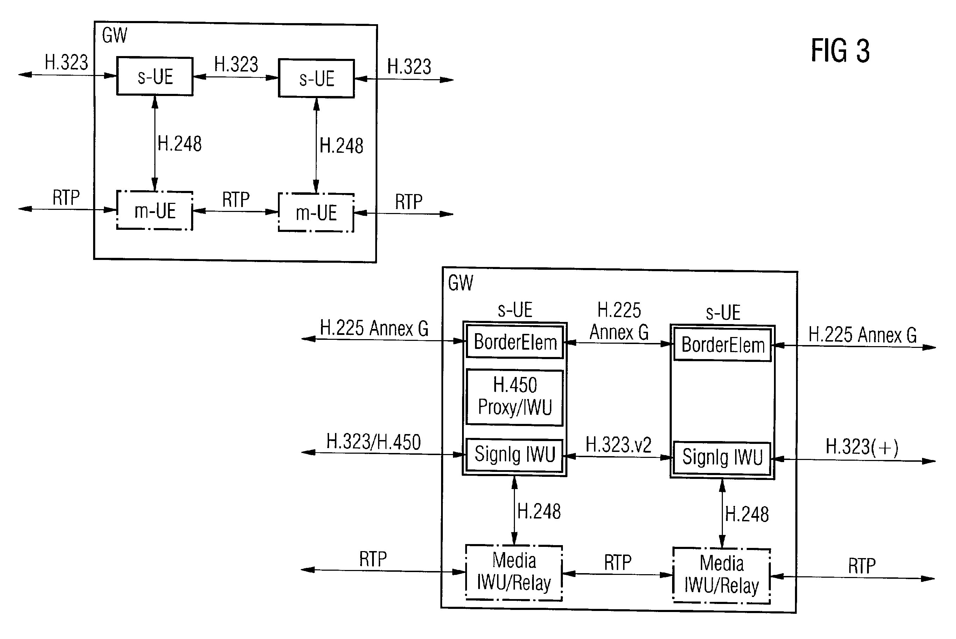

Gemäß Figur 3 weist das Netzelement, nachstehend Gateway GW genannt, folgende funktionale Einheiten auf:
- Mindestens eine Signalisierungsübertragungseinheit s-UE, die im wesentlichen die folgenden Aufgaben wahrnimmt:
   - Signalisierungsumsetzung
   - Protokoll-Terminierung
   - Service-Überwachung
   - Firewall-Proxy-Funktionalität
   - Adressumsetzung für Signalisierungs- und Nutzdateninformationsstrom
   - Verfolgung der aktiv zwischen den beiden Domänen verlaufenden Kommunikationsverbindungen
   - Steuerung der Media-Übertragungseinheiten m-UE
   - Umsteuerung auf andere Media-Übertragungseinheiten m-UE

Die funktionale Einheit der Signalisierungsübertragungseinheit zur Signalisierungsumsetzung ist für die Umsetzung der Signalisierungsinformation einer ersten Domäne in diejenigen einer zweiten Domäne und umgekehrt zuständig. Diese Einheit besteht aus jeweils einer Untereinheit pro angrenzender Domäne, die die Signalisierung an der Netz- bzw. Domänegrenze auf ein Referenzformat umsetzt, welches von einer entsprechenden Einheit der jeweiligen Gegenstelle weiterverarbeitet werden kann. Bei einer solchen Signalisierungsumsetzung kann eine es auch notwendig sein, diejenigen Signalisierungsinformationen an der Netzgrenze zu terminieren (Protokoll-Terminierung), die in der anderen zweiten Domäne nicht sinnvoll umgesetzt werden können. Dies gilt insbesondere für solche Leistungsmerkmale, die prinzipiell zwar umgesetzt werden können, jedoch für den speziellen rufenden oder gerufenen Teilnehmer nicht erlaubt sind (Service-Überwachung).

Zudem kann die Signalierungsübertragungseinheit durch folgenden Komponenten (siehe Figur 3) repräsentiert werden:
- Ein sogenanntes Border-Element BorderElem zum Aufbau einer Punkt-zu-Punkt-Verbindung von einer Signalisierungsübertragungseinheit zu einer weiteren Signalisierungsübertragungseinheit (in Figur 3 mit der Verbindung durch H.225 Annex G gekennzeichnet),
- Eine optionale, zur Dienste- bzw. Leistungsmerkmalssteuerung, insbesondere von Soft-PBX (z.B. HIPASS von der Firma Siemens AG) unterstützten Leistungsmerkmalen, geeignete Proxy- bzw. Interworking-Einheit H.450 Proxy/IWU,
- Eine zur Verarbeitung von Signalisierungsdaten geeignete Signalisierungseinheit SignIg IWU.

Des Weiteren steuert die Signalisierungsübertragungseinheit neben der Media-Übertragungseinheit die sogenannte Daten-Firewall und veranlasst diese, sowohl die für die Signalisierung vorgesehenen Ausgänge (Ports) als auch die für die Nutzdatenübertragung vorgesehenen Ausgänge (Ports) insbesondere für Übertragung der Sprachdatenpakete (RTP-Pakete) dezidiert zu öffnen sowie nach Beendigung der Sprachkommunikationsverbindung wieder zu schließen (Firewall-Proxy-Funktionalität). Dazu muß die Signalisierungsübertragungseinheit im Falle von IPV4-Datenpaketen auch die sogenannte NAT-Funktionalität (NAT = Network address translation) unterstützen (Address-Umsetzung für Signalisierungsdaten und Nutzdateninformationsstrom).

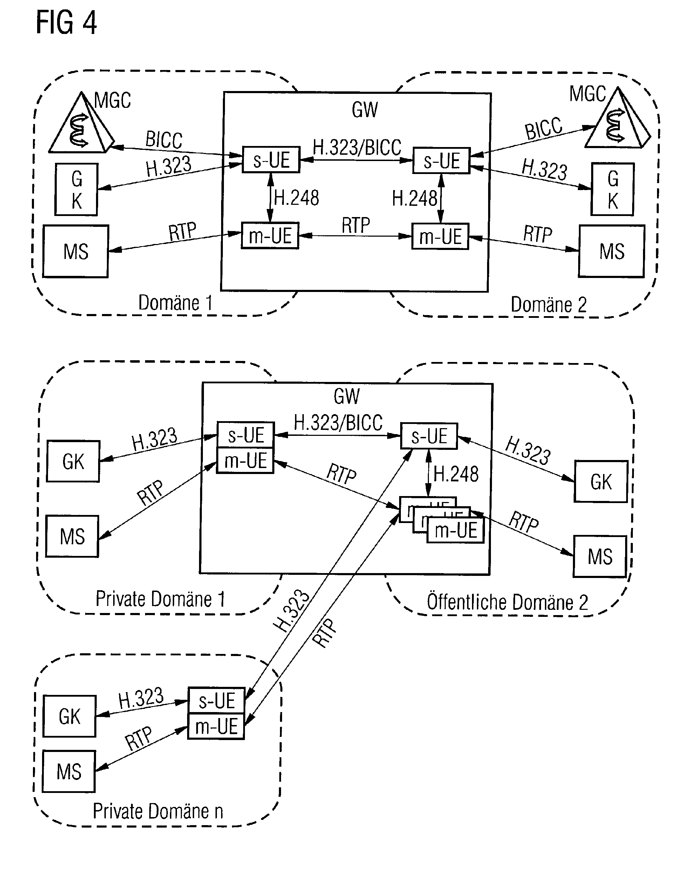

Über alle aktiven Kommunikationsverbindungen zwischen den beiden Domänen wird der aktuelle Zustand verfolgt, so dass unter Umständen regulatorische Maßnahmen ergriffen werden können. Meldet beispielsweise eine gesteuerte Media-Übertragungseinheit eine Überlast, so wird durch die jeweils steuernde Signalisierungsübertragungseinheit gegebenenfalls weitere eintreffender Datenverkehr auf andere Media-Übertragungseinheiten umgesteuert.
- Mindestens eine Media-Übertragungseinheit m-UE:
   Auch die Media-Übertragungseinheit besteht aus jeweils einer Untereinheit pro angrenzender Domain, die das jeweilige RTP-Format der Sprachnutzdatenpakete in ein Referenzformat wandelt und mit der jeweiligen Gegenseite kommuniziert.
   Die Aufgaben der Media-Übertragungseinheit umfassen:
   - Übertragung der Media-Nutzdatenpakete (Nutzinformation) zwischen beiden Domänen unter Ausnutzung der Steuerinformation, die von der zuständigen Signalisierungsübertragungseinheit empfangen wurde: Gesteuert durch die jeweilige Signalisierungsübertragungseinheit werden alle zu einer Kommunikationsverbindung gehörenden Sprachnutzdatenpakete (RTP-Pakete) auf das Referenzformat umgesetzt und zum jeweiligen Endpunkt z.B. H.323- bzw. SIP-Terminal MS (in Figur 4) der benachbarten Domäne gesendet.
   - Berücksichtigung von Prioritätsangaben (z.B. MPLS-Levels (MPLS = Multi Protocol Label Switching), oder TOS-Bits (TOS = Type of Service), oder DiffServ-Levels (DiffServ = Differentiated Services) seitens der steuernden Einheit:
      Die Media-Gateway-Einheit muss in der Lage sein, die Pakete bestimmter Priorität aus der eigenen Domäne in ein Referenzformat umzusetzen, so dass die korrespondierende Einheit dieses Referenz-Prioritätsformat wiederum in das jeweils in der eigenen Domäne benutzte Prioritätsformat umzusetzen.
   - Protokollierung des Paketflusses aller über Domänegrenzen hinweg übertragenen RTP-Pakete sowie die zu einer Kommunikationsverbindung gehörigen Datenpakete:
      Die jeweils zur eigenen Domäne gehörige Media-Übertragungseinheit zählt zu jeder Kommunikationsverbindung (und
      Prioritätsebene) die jeweils empfangenen und gesendeten Pakete und bildet die Summe über alle empfangenen und gesendeten Pakete, um daraus ein Ergebnis über Auslastung und gegebenenfalls über eine zu erwartende Überlast zu ermitteln. Dieses Ergebnis wird der Signalisierungsübertragungseinheit gemeldet, so dass geeignete Gegenmaßnahmen getroffen werden können.

Die Media-Übertragungseinheit kann durch eine in Figur 3 gezeigte Media-Interworking-Einheit/-Relay Media IWU/Relay oder einen Router repräsentiert werden oder eine voll transparente Funktion, z.B. in Form eines -Nullmodems, aufweisen.

Figur 4 zeigt Varianten für das erfindungsgemäße Netzelement GW. Das Netzelement GW, dargestellt im oberen Teil der Figur 4, könnte typischerweise zwischen zwei öffentlichen ISP-Netzwerken (ISP = Internet Service Provider, d.h. Internetdienstanbieter) angeordnet sein. Um dem vergleichsweise großen Verkehrsdatenaufkommen gerecht zu werden, sind die jeweiligen funktionalen Einheiten der Signalisierungs- und Media-Übertragungseinheiten auf performanten Hardwareplattformen getrennt voneinander implementiert. Die Kommunikation zwischen den funktionalen Einheiten erfolgt über standardisierte Protokolle. Im unteren Teil der Figur 3 werden mehrere kleinere sogenannte Enterprise-Domänen (private Domänen, vorzugsweise innerhalb eines Unternehmens), bei denen die funktionalen Einheiten der Signalisierungs- und Media-Übertragungseinheiten vorwiegend auf einer Hardwareplattform implementiert sind, mit einem Netzelement (Gateway) GW einer öffentlichen Domäne verbunden, welches eine verteilte Struktur aufweist.

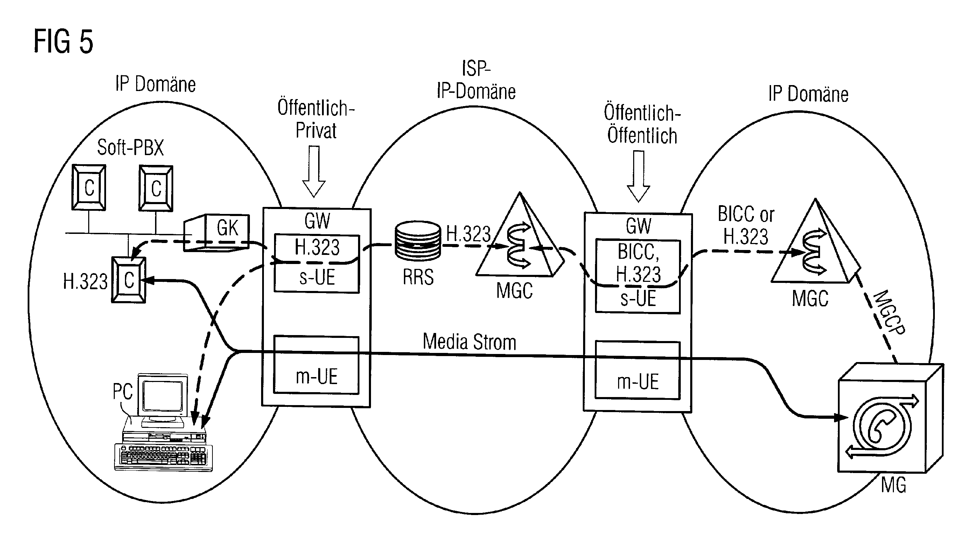

In Figur 5 ist ein typische Netzkonfiguration für das erfindungsgemäße Netzelement (Gateway) GW aufgezeigt sowie eine beispielhafte, über mehrere verschiedene Kommunikationsnetze führende Kommunikationsverbindung angedeutet. In dieser Darstellung ist eine sogenannte Enterprise-Soft-PBX (PBX = Nebenstellenanlage) - z.B. ein Firmen-IP-Netzwerk - mit einem öffentlichen IP-Netz eines Internetdienstanbieters (ISP) mittels eines solchen IP/IP-Gateways verbunden. Zwischen dem öffentlichen IP-Netz und einem bzw. mehreren öffentlichen IP-Netzen (z.B. einem IP-Netz eines UMTS-Dienstanbieters (UMTS = Universal Mobile Telephone System)) besteht ebenfalls eine Verbindung über ein IP/IP-Gateway.

## Patentansprüche

1. Netzelement (GW) zur Verarbeitung von Signalisierungsdaten und zur Verbindungssteuerung einer Sprachkommunikationsverbindung zwischen wenigstens zwei unterschiedlichen paketvermittelnden Kommunikationsnetzen oder Domänen zugeordneten Kommunikationseinrichtungen (KE, PC) innerhalb eines Kommunikationsnetzes, umfassend:
- mindestens eine Signalisierungsübertragungseinheit (s-UE) zur Umsetzung des Signalisierungsdatenformats von aus einer ersten Domäne stammenden Signalisierungsdaten in ein zur Weiterleitung der Signalisierungsdaten in eine zweite Domäne geeignetes Datenformat sowie
- mindestens eine Media-Übertragungseinheit (m-UE) zur Umsetzung des Media-Datenformats von aus der ersten Domäne stammenden, zur Sprachkommunikationsverbindung gehörenden Nutzdaten in ein zur Weiterleitung der Nutzdaten in die zweite Domäne geeignetes Datenformat,
- wobei die Signalisierungsübertragungseinheit (s-UE) zusätzlich Kommunikationsmittel zur Steuerung der Media-Übertragungseinheit (m-UE) unter Ausnutzung der Information aus den Signalisierungsdaten aufweist.

2. Netzelement nach Anspruch 1 **dadurch gekennzeichnet, dass** die Signalisierungsübertragungseinheit die Media-Übertragungseinheit nach einer Master/Slave-Beziehung steuert.

3. Netzelement nach Anspruch 2 **dadurch gekennzeichnet, dass** sich die Master/Slave-Beziehung durch eine Status-, Auslastungs- und Funktionalitätsermittlung der jeweiligen Media-Übertragungseinheit auszeichnet.

4. Netzelement nach einem der vorhergehenden Ansprüche **dadurch gekennzeichnet, dass** die mindestens eine Signalisierungsübertragungseinheit (s-UE) Kommunikationsmittel zur Umsetzung des Netzadressformats von aus einer ersten Domäne stammenden Signalisierungsdaten in ein Netzadressformat, das zur Weiterleitung der Signalisierungsdaten in eine zweite Domäne geeignet ist, aufweist.

5. Netzelement nach einem der vorhergehenden Ansprüche **dadurch gekennzeichnet, dass** die mindestens eine Signalisierungsübertragungseinheit (s-UE) Kommunikationsmittel zur Terminierung von aus einer ersten Domäne stammenden Signalisierungsdaten aufweist, die in der ersten Domäne gültige Leistungsmerkmale betreffen.

6. Netzelement nach einem der vorhergehenden Ansprüche **dadurch gekennzeichnet, dass** die mindestens eine Signalisierungsübertragungseinheit (s-UE) Kommunikationsmittel mit einer sogenannten Firewall-Proxy-Funktionalität aufweist, wodurch die zur Sprachverbindung gehörenden Nutzdaten eine Daten-Firewall passieren können.

7. Netzelement nach einem der vorhergehenden Ansprüche **dadurch gekennzeichnet, dass** die mindestens eine Signalisierungsübertragungseinheit (s-UE) Kommunikationsmittel zur Kontrolle des Verkehrsaufkommens und zur Überlastabwehr aufweist.

8. Netzelement nach einem der vorhergehenden Ansprüche **dadurch gekennzeichnet, dass** die mindestens eine Signalisierungsübertragungseinheit (s-UE) Kommunikationsmittel zur Umsetzung und Überwachung sowie gegebenenfalls zur Sperrung von Leistungsmerkmalen aufweist.

9. Netzelement nach einem der vorhergehenden Ansprüche **dadurch gekennzeichnet, dass** die mindestens eine Media-Übertragungseinheit (m-UE) Kommunikationsmittel zur zur Umsetzung von Prioritätskennzeichen von aus einer ersten Domäne stammenden Signalisierungsdaten in Prioritätskennzeichen, die zur Weiterleitung der Signalisierungsdaten in eine zweite Domäne geeignet sind, aufweist.

10. Netzelement nach einem der vorhergehenden Ansprüche **dadurch gekennzeichnet, dass** die mindestens eine Media-Übertragungseinheit (m-UE) Kommunikationsmittel zur Kontrolle des Verkehrsaufkommens und zur Überlastabwehr aufweist.

11. Netzelement nach einem der vorhergehenden Ansprüche **dadurch gekennzeichnet, dass** die logisch zusammengehörigen Übertragungseinheiten in Form der mindestens einen Signalisierungsübertragungseinheit (s-UE) und der mindestens einen Media-Übertragungseinheit (m-UE) auf einer gemeinsamen Hardware-Plattform realisiert sind.

12. Netzelement nach einem der vorhergehenden Ansprüche 1 bis 10 **dadurch gekennzeichnet, dass** die logisch zusammengehörigen Übertragungseinheiten in Form der mindestens einen Signalisierungsübertragungseinheit (s-UE) und der mindestens einen Media-Übertragungseinheit (m-UE) auf getrennten Hardware-Plattformen realisiert sind.

13. Verfahren zur Verarbeitung von Signalisierungsdaten und zur Verbindungssteuerung einer Sprachkommunikationsverbindung zwischen wenigstens zwei unterschiedlichen Domänen zugeordneten Kommunikationseinrichtungen (KE, PC) innerhalb eines paketvermittelnden Kommunikationsnetzes, aufweisend folgende Schritte:
- Umsetzung des Datenformats von aus einer ersten Domäne kommenden Signalisierungsdaten in ein zur Weiterleitung der Signalisierungsdaten in eine zweite Domäne geeignetes Datenformat,
- Umsetzung des Datenformats von aus einer ersten Domäne kommenden, zur Sprachkommunikationsverbindung gehörenden Nutzdaten in ein zur Weiterleitung der Nutzdaten in eine zweite Domäne geeignetes Datenformat und
- Weiterleitung der umgesetzten Signalisierungs- und Nutzdaten in die zweite Domäne,
- wobei die Umsetzung der Signalisierungsdaten und die Umsetzung der Nutzdaten durch eine Steuerung unter Ausnutzung der Information aus den Signalisierungsdaten miteinander synchronisiert werden.
